# EUROPÄISCHE PATENTSCHRIFT

(11) **EP 2 979 011 B1**
(45) Veröffentlichungstag und Bekanntmachung des Hinweises auf die Patenterteilung: **04.12.2019**
(21) Anmeldenummer: 14705038.9
(22) Anmeldetag: 14.02.2014
(51) Int. Cl.: F16J 15/16, F16J 15/32, B60T 15/02

(54) **KOLBEN FÜR EIN DRUCKLUFT-STEUERVENTIL**
PISTON FOR A COMPRESSED AIR CONTROL VALVE
PISTON POUR VALVE DE COMMANDE PNEUMATIQUE

(30) Priorität: 30.03.2013 DE 102013005711
(43) Veröffentlichungstag der Anmeldung: 03.02.2016
(73) Patentinhaber: WABCO GmbH, 30453 Hannover (DE)
(72) Erfinder: DIDWISZUS, Lars, 30559 Hannover (DE); KIEL, Bernd-Joachim, 31515 Wunstorf (DE); MÜLLER, Thomas, 30655 Hannover (DE); NAVE, Manuel, 31180 Giesen (DE)
(74) Vertreter: Lauerwald, Jörg
(86) Internationale Anmeldenummer: PCT/EP2014/000410
(87) Internationale Veröffentlichungsnummer: WO 2014/161622

(56) Entgegenhaltungen:
- DE-A1-102006 017 503
- DE-U1- 29 610 628
- US-A- 3 224 378

## Beschreibung

Die Erfindung betrifft einen Kolben eines Steuerventils in einer Druckluftanlage eines Fahrzeugs gemäß dem Oberbegriff des Patentanspruchs 1.

Aus dem Stand der Technik sind druckunterstützte Dichtelemente, wie beispielsweise sogenannte, u. a. von der Fa. Freudenberg Simrit GmbH & Co. KG erhältliche "Airzet"-Dichtringe (Airzet PR und Airzet PK), Nutringe oder dergleichen zur Abdichtung eines Kolbens gegenüber einem diesen umschließenden Zylinder in einer großen Variationsbreite bekannt. So offenbart die DE 296 10 628 U1 beispielsweise eine Dichtungsanordnung mit einem elastischen Dichtring, der aus einem Halteteil und einem Dichtteil sowie einem zwischen diesen beiden Teilen liegenden, ungefähr Z-förmigen Verbindungsteil besteht. Die Stirnflächen des Dichtteils sind durch vorspringende Leisten gebildet, zwischen denen Durchgangsquerschnitte vorhanden sind, um den Medien beiderseits des Dichtrings Zutritt zu den Nuten des Z-förmig gestalteten Verbindungsteils und damit die druckunterstützende Wirkung zu gewährleisten. Zur Abdichtung eines Kolbens gegenüber einem Zylinder ist diese Dichtungsanordnung in eine umlaufende Kolbennut eingelegt. Ein Nachteil dieser Dichtungsanordnung liegt unter anderem darin, dass beispielsweise im Fall einer betriebsbedingten Verformung des Dichtrings, insbesondere bei einer radialen Stauchung desselben, die Durchgangsquerschnitte der zwischen den Leisten befindlichen Öffnungen zumindest teilweise verschlossen werden können, so dass die druckunterstützte Abdichtungswirkung nicht mehr vollumfänglich gegeben ist, was insbesondere bei Kolben eintreten kann, welche für Steuerventile von Fahrzeug-Druckluftanlagen eingesetzt werden. Solche Steuerventile sind beispielsweise aus der DE 10 2009 040 759 A1, der DE 10 2009 029 968 A1, der DE 195 10 492 A1, der DE 10 2006 017 503 A1, oder der DE 102 45 916 A1 bekannt. Ein gattungsgemäßer Kolben ist aus der US 3,224,378 A bekannt.

Der Erfindung liegt daher die Aufgabe zugrunde, einen Kolben vorzustellen, der eine konstruktiv einfache sowie druckunterstützte Abdichtung von zwei Zylinderräumen gegeneinander ermöglicht.

Erfindungsgemäß ist daher vorgesehen, dass der Kolben im Bereich seiner Ringnut in jeder seiner beiden Nutwände wenigstens eine axiale Öffnung aufweist, welche zwei Druckunterstützungsräume mit dem jeweils zugeordneten ersten oder zweiten Zylinderraum verbinden, wobei die beiden Druckunterstützungsräume durch den Dichtring sowie durch die dem Dichtring jeweils zugeordneten zugeordnete Nutwände gebildet sind.

Die Erfindung geht von der Erkenntnis aus, dass bei bekannten Kolben deren Abdichtung gegenüber der Innenmantelfläche eines zugeordneten Zylinders mittels eines druckunterstützten Dichtrings erfolgt, bei dem die Druckunterstützung mit Hilfe von am Dichtring ausgebildeten Durchbrechungen eintritt, durch welche die Medien beiderseits des Dichtrings aus vorrangig radialer Richtung Zugang zu Druckunterstützungsräumen am Dichtring haben. Ein von einem solchen Dichtring unabhängiger Zugang zu solchen Druckunterstützungsräumen kann dadurch geschaffen werden, dass diesbezügliche Öffnungen in dem Kolben ausgebildet sind, welche die jeweils zugeordneten Zylinderräume mit den jeweiligen Druckunterstützungsräumen unabhängig von etwaigen Verformungen des Dichtrings verbinden.

Die Erfindung betrifft demzufolge einen Kolben, beispielsweise für ein Steuerventil in einer Druckluftanlage eines Fahrzeugs, welcher entlang einer Längsmittelachse axial verschiebbar in einem Zylinder derart aufnehmbar ist, dass er einen ersten Zylinderraum und einen zweiten Zylinderraum voneinander trennt, welcher eine umlaufende Ringnut mit einer näherungsweise rechteckförmigen Querschnittsgeometrie aufweist, in der ein Dichtring einsetzbar ist, der mit seinem freien Ende an die Innenmantelfläche des Zylinders anlegbar ist sowie nach dessen Einsetzen in die Ringnut des Kobens zusammen mit wenigstens einer Nutwand zumindest einen Druckunterstützungsraum begrenzt. Zur Lösung der gestellten Aufgabe ist vorgesehen, dass der Kolben im Bereich seiner Ringnut wenigstens eine axiale Öffnung aufweist, welche den zumindest einen Druckunterstützungsraum mit dem zugeordneten ersten oder zweiten Zylinderraum verbindet.

Hierdurch ist eine zuverlässige Verbindung zwischen den vorzugsweise zwei Druckunterstützungsräumen und den beiden Zylinderräumen bei einem zugleich konstruktiv einfachen Aufbau des Kolbens gegeben. Diese Verbindung dient zum Durchströmen eines Fluids und bleibt in vorteilhafter Weise unabhängig von einer unter Umständen auftretenden geometrischen Deformation des Dichtrings bestehen, beispielsweise bei einer ungewollten Quetschung oder Stauchung desselben innerhalb der Ringnut des Kolbens.

Als Fluid wird im Kontext dieser Beschreibung ein beliebiges Gas oder eine Flüssigkeit verstanden. Der Kolben ist bevorzugt in einem druckluftbetriebenen Steuerventil eingesetzt und kann die Funktion eines Relaiskolbens innehaben.

Wenngleich ein Kolben gemäß der Erfindung mit einem Dichtring ausgestattet werden kann, der zusammen mit den Nutwänden der Ringnut des Kolbens nur einen Druckunterstützungsraum bildet, und bei dem dieser einzige, ringförmig umlaufende Druckunterstützungsraum mit dem ihm zugeordneten Druckraum durch wenigstens eine axiale Öffnung in der Nutwand verbunden ist, so wird es als vorteilhafter beurteilt, einen Dichtring-Kolben-Kombination mit zwei Druckunterstützungsräumen zu nutzen.

Bei einer anderen vorteilhaften Weiterbildung des Konstruktionsprinzips der Erfindung ist vorgesehen, dass die erste Nutwand und die zweite Nutwand jeweils mindestens drei Öffnungen aufweisen, die gleichmäßig zueinander beabstandet umfangsbezogen entlang der Ringnut verteilt angeordnet sind. Hierdurch ist eine gleichmäßige und verlässliche Belüftung der Druckunterstützungsräume am Dichtring mit dem Fluid realisierbar.

Weiter kann vorgesehen sein, dass die genannten axialen Öffnungen in der ersten Nutwand und in der zweiten Nutwand umfangsbezogen sowie radial jeweils übereinander angeordnet sind. Dies ermöglicht eine signifikante Vereinfachung des Fertigungsprozesses, da die Öffnungen in den beiden parallel übereinander angeordneten Nutwänden in einem Arbeitsgang und darüber hinaus mittels ein und desselben Werkzeugs hergestellt werden können.

Hinsichtlich der konkreten Ausbildung der Öffnungen in den Nutwänden kann gemäß einer ersten Ausführungsform vorgesehen sein, dass diese als schlitzförmige und radial verlaufende Ausnehmungen mit einer jeweils näherungsweise rechteckförmigen Querschnittsgeometrie ausgebildet sind. Hierdurch weisen die Öffnungen in den jeweiligen Nutwänden zur Zuführung des Fluids in die Druckunterstützungsräume einen besonders großen Strömungsquerschnitt auf.

In diesem Zusammenhang ist bevorzugt vorgesehen, dass die Ausnehmungen in der ersten Nutwand jeweils ausgehend von deren radialen Außenrand radial nach innen gerichtet zumindest bis in den Bereich des darunter liegenden ersten Druckunterstützungsraumes verlaufen. Hierdurch ist trotz einer minimalen strukturellen Schwächung der zugehörigen Nutwand des Kolbens eine besonders effektive Zuleitung des Fluids aus dem ersten Zylinderraum in den zugehörigen ersten Druckunterstützungsraum des Dichtrings gegeben.

Ebenso kann vorgesehen sein, dass die Ausnehmungen in der zweiten Nutwand jeweils ausgehend von deren radialen Au ßenrand radial nach innen gerichtet zumindest bis in den Bereich des darüber liegenden zweiten Druckunterstützungsraumes verlaufen. Hierdurch ergibt sich eine strömungstechnisch effektive und weitgehend von Verformungen des Dichtrings unabhängige Zufuhr des Fluids aus dem zweiten Zylinderraum in den zweiten Druckunterstützungsraum bei einer zugleich minimierten mechanisch-strukturellen Schwächung des Kolbens.

Zur Maximierung des nutzbaren Strömungsquerschnittes kann vorgesehen sein, dass wenigstens eine der Ausnehmungen in der ersten Nutwand und/oder in der zweiten Nutwand jeweils ausgehend von deren radialen Außenrand radial nach innen gerichtet bis zu dem Nutboden heranreicht.

Bei einer weiteren Ausgestaltung weisen radial innen liegende Endabschnitte der schlitzförmigen Ausnehmungen jeweils eine Rundung auf. Hierdurch wird die Entstehung von mechanischen Kerbspannungen und die damit einhergehende Gefahr einer Rissbildung innerhalb des Kolbens vermieden.

Gemäß einer anderen Ausführungsform ist vorgesehen, dass die Öffnungen als durchgehende achsparallele Bohrungen in zumindest einer Nutwand ausgebildet sind, dass diese Bohrungen jeweils im radialen Bereich des wenigstens einen Druckunterstützungsraumes angeordnet sind, und dass die Bohrungen jeweils senkrecht zur Flächennormalen in der dem Druckunterstützungsraum zugeordneten Nutwand eingebracht sind. Hierdurch ist im Vergleich zu den schlitzförmigen Ausnehmungen die mechanische Schwächung des Kolbens minimiert sowie der Fertigungsaufwand zur Herstellung der Öffnungen an der Kolbennut reduziert.

Wenngleich die beschriebenen axialen Öffnungen in den Nutwänden, gebildet durch schlitzförmige und radial verlaufende Ausnehmungen oder achsparallele Bohrungen, die geringste Verstopfungsgefahr in sich bergen, kann der Kolben zusätzlich zu diesen axialen Öffnungen in wenigstens einer Nutwand wenigstens eine radiale Rinne aufweisen, die ebenfalls in Strömungsverbindung mit einem zugeordneten Druckraum steht. Daher kann in einer weiteren Ausführungsform vorgesehen sein, dass der Kolben im Bereich seiner Ringnut in einer Nutwand wenigstens eine axiale Öffnung aufweist, welche einen ersten Druckunterstützungsraum mit einem ersten Zylinderraum verbindet, und dass in der anderen Nutwand dichtringseitig wenigstens eine radiale Rinne ausgebildet ist, welche den zweiten Druckunterstützungsraum mit dem zweiten Zylinderraum verbindet. Auch wenn diese Bauweise als weniger optimal angesehen wird, kann sie bei sauberen Fluiden und qualitativ hochwertigem und abriebarmen Dichtringmaterial mit Erfolg besonders wirtschaftlich eingesetzt werden, denn die Ausbildung einer solchen radialen Rinne ist ungleich kostengünstiger als die Herstellung der genannten axialen Öffnungen in den Nutwänden.

In vorteilhafter Weise ist der Dichtring aus einem Elastomer mit hoher Elastizität und großer Abriebfestigkeit gebildet. Hierdurch ergibt sich eine wirkungsvolle Abdichtung der Zylinderräume gegeneinander bei einer zugleich großen Verschleißfestigkeit. Beispielsweise kann ein hydrierter Acrylnitrilbutadien-Kautschuk (HNBR) genutzt werden, wodurch sich eine ausgezeichnete Abdichtungswirkung bei einer zugleich hohen Standzeit der druckunterstützten Abdichtung zwischen dem Kolben und dem Zylinder ergibt. Es ist insbesondere bei Nutzung eines metallischen Kolbens auch möglich, die genannten axialen und radialen Belüftungsöffnungen spannend herzustellen.

In einer besonders bevorzugten Weiterbildung der Erfindung ist vorgesehen,
dass der Kolben als Steuerkolben eines Steuerventils einer Druckluftanlage eines Fahrzeuges ausgebildet ist.

Diese Weiterbildung lässt sich noch dadurch ergänzen, dass das Steuerventil wenigstens ein Relaisventil mit einem Steuerkolben aufweist.

Schließlich kann ergänzend noch vorgesehen sein, dass das Steuerventil als Achsmodulator ausgebildet ist, welcher wenigstens ein Relaisventil, vorzugsweise zwei Relaisventile mit jeweils einem Steuerkolben aufweist.

Zum besseren Verständnis der Erfindung ist der Beschreibung eine Zeichnung mit Ausführungsbeispielen beigefügt. In dieser zeigt
Fig. 1 einen Teilquerschnitt durch einen Kolben gemäß dem Stand der Technik mit einem druckunterstützten Dichtring,
Fig. 2 eine schematische sowie perspektivische Teilansicht eines Kolbens gemäß der Erfindung,
Fig. 3 einen Teilquerschnitt durch einen Kolben gemäß Fig. 2,
Fig. 4 einen Kolben wie in Fig. 2, jedoch mit einem Dichtring, der nur einen Druckunterstützungsraum bildet,
Fig. 5 einen Kolben wie in Fig. 2, bei dem an der unteren Ringnutwand eine radiale Rinne ausgebildet ist, und
Fig. 6 ein Ausführungsbeispiel eines Steuerventils mit Kolben gemäß der Erfindung in schematischer Schnittdarstellung.

In der Zeichnung weisen dieselben konstruktiven Elemente jeweils die gleiche Bezugsziffer auf.

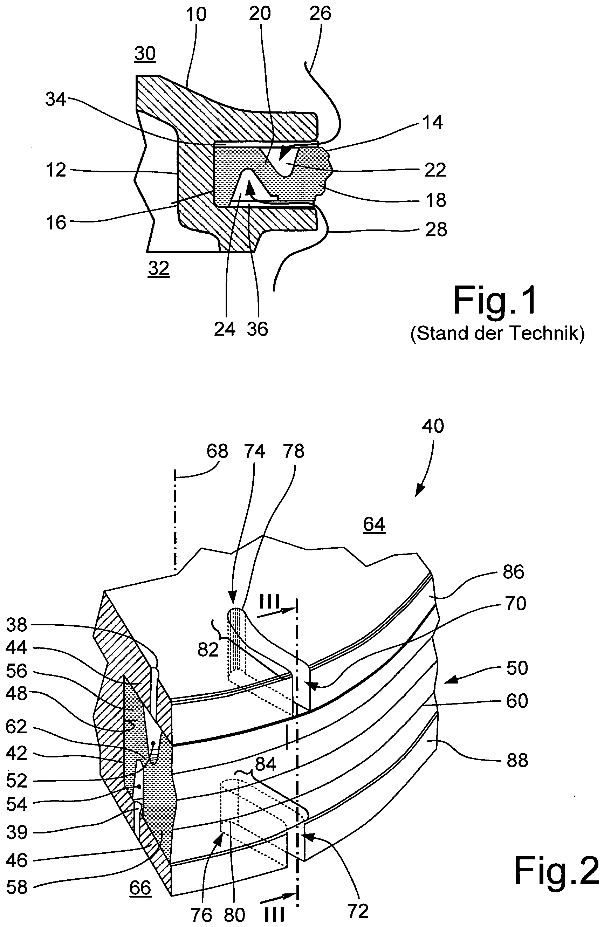

Fig. 1 zeigt einen vereinfachten Teilquerschnitt durch eine bekannte Ausführungsform eines Kolbens 10 mit einem druckunterstützten Dichtring 14. Der Kolben 10 verfügt über eine umlaufende Ringnut 12 mit einer rechteckförmigen Querschnittsgeometrie, in die ein beidseitig druckunterstützter Dichtring 14 eingesetzt ist. Der Dichtring 14 ist hier lediglich exemplarisch als ein sogenannter Airzet-Dichtring mit einer Z-förmigen Querschnittsgeometrie ausgeführt. Abweichend von diesem Airzet-Dicht-Ring kann jede andere Ausführungsform eines druckunterstützten Dichtelements zum Einsatz kommen.

Der Dichtring 14 verfügt über einen am Nutboden anliegenden Halteabschnitt 16 sowie über einen Dichtabschnitt 18 mit einem freien Ende, die durch einen schrägen Zwischenabschnitt 20 miteinander verbunden sind. Der Dichtabschnitt 18 liegt bevorzugt unter einer leichten radialen mechanischen Vorspannung an einer hier nicht dargestellten Innenmantelfläche eines gleichfalls nicht eingezeichneten Zylinders an. Der Zwischenabschnitt 20 bildet zusammen mit der Innenseite der Ringnut 12 einen ersten Druckunterstützungsraum 22 und einen zweiten Druckunterstützungsraum 24, die jeweils eine in etwa V-förmige Querschnittsgeometrie aufweisen.

Wie durch die beiden Strömungspfeile 26 und 28 angedeutet ist, stehen die beiden Druckunterstützungsräume 22, 24 zur Unterstützung der Abdichtungswirkung des Dichtrings 14 mit den beiden durch den Kolben 10 separierten Zylinderräumen 30, 32 in einer pneumatischen oder hydraulischen Verbindung. Hierdurch kann ein in den beiden Zylinderräumen 30, 32 enthaltenes Fluid, wie beispielsweise Druckluft, in die beiden, jeweils einem Zylinderraum 30, 32 zugeordneten Druckunterstützungsräume 22, 24 hinein gelangen. Die zum freien, ungehinderten Durchtritt des Fluids notwendigen Kanäle sind am Dichtring 14 durch integral angeformte Leisten 34, 36 beziehungsweise Vorsprünge geschaffen, die zu diesem Zweck über mehrere radial ausgerichtete Durchbrechungen oder Ausnehmungen verfügen, und die jeweils an gegenüberliegenden parallelen Innenflächen der Ringnut 12 unter einem leichten Pressschluss zur Anlage kommen.

Von Nachteil bei diesem bekannten Aufbau ist, dass, wie durch die Strömungspfeile 26, 28 angedeutet ist, das Fluid ausgehend von den Zylinderräumen 30, 32 ausschließlich radial von außen in die beiden Druckunterstützungsräume 22, 24 einströmen kann, so dass bereits im Fall einer geringfügigen axialen Verformung des Dichtrings 14 die von den beiden Leisten 34, 36 freigehaltenen Durchgänge zu den Druckunterstützungsräume 22, 24 zumindest teilweise versperrt sind, und die Druckunterstützung des Dichtrings 14 durch das unter Druck stehende Fluid nicht mehr in vollem Umfang gewährleistet ist. Die weiteren technischen Einzelheiten des Dichtrings 14 sind beispielsweise der DE 296 10 628 U1 entnehmbar, auf die hier ausdrücklich Bezug genommen wird.

Fig. 2 zeigt eine vereinfachte perspektivische Teilansicht eines gemäß der Erfindung ausgebildeten Kolbens 40. Der zylindrische Kolben 40 weist eine periphere, umlaufende Ringnut 42 mit einer ersten und einer zweiten Nutwand 44, 46 auf, die parallel sowie axial beabstandet zueinander verlaufen, und einem die beiden Nutwände 44, 46 verbindenden Nutboden 48. Der Kolben 40 ist in einem Relais-Ventil einsetzbar, bei dem Druckluft als Fluid genutzt wird.

Die beiden parallelen Nutwände 44, 46 sowie der Nutboden 48 bilden zusammen mit einer nicht bezeichneten Nutöffnung eine rechteckförmige Querschnittsgeometrie. In der Ringnut 42 ist ein Dichtring 50 unter einem leichten Pressschluss aufgenommen, der in diesem Ausführungsbeispiel zusammen mit den beiden Nutwänden 44, 46 einen ersten Druckunterstützungsraum 52 sowie einen zweiten Druckunterstützungsraum 54 begrenzen. Ferner weist der Dichtring 50 einen radial inneren Halteabschnitt 56 zur Lagesicherung innerhalb der Ringnut 42 und einen radial nach außen gerichteten Dichtabschnitt 58 mit einem Dichtvorsprung 60 auf, wobei die beiden im Querschnitt jeweils näherungsweise V-förmigen Druckunterstützungsräume 52, 54 in etwa gegenüberliegend an einem schrägen Zwischenabschnitt 62 des Dichtrings 50 ausgebildet sind. Der Kolben 40 trennt einen ersten Zylinderraum 64 und einen zweiten Zylinderraum 66 axial voneinander, die jeweils mit einem geeigneten Fluid, wie beispielsweise Druckluft, einem dazu alternativen Gasgemisch oder einer Flüssigkeit angefüllt sind.

Gemäß einer ersten Ausführungsform der Erfindung ist in der ersten Nutwand 44 und in der zweiten Nutwand 46 jeweils mindestens eine schlitzförmige, radial nach innen, in Richtung einer Längsmittelachse 68 des Kolbens 40 weisende Ausnehmung als eine durchgehende Öffnung eingelassen, von denen hier zwei stellvertretend für alle weiteren, nicht dargestellten Ausnehmungen beziehungsweise Öffnungen die Bezugsziffern 70, 72 tragen und eine ungefähr quaderförmige Geometrie aufweisen.

Bevorzugt sind in den beiden Nutwänden 44, 46 jeweils mindestens drei axial übereinander angeordnete und gleichmäßig zueinander über den Umfang des Kolbens 40 hinweg verteilte Ausnehmungen 70, 72 vorgesehen, um eine strömungstechnisch möglichst wirkungsvolle Verbindung der beiden Zylinderräume 64, 66 mit den beiden, jeweils zugeordneten Druckunterstützungsräumen 52, 54 zu erreichen. Die Ausnehmungen 70, 72 durchsetzen die Nutwände 44, 46 axial vollständig und senkrecht zu diesen beziehungsweise parallel zu der Längsmittelachse 68, um den Durchtritt des Fluids mit einem möglichst geringen Strömungswiderstand zu ermöglichen. Erkennbar reicht die Ausnehmung 70 in der oberen Nutwand 44 radial nach innen bis zum Nutboden 48 der Ringnut 42.

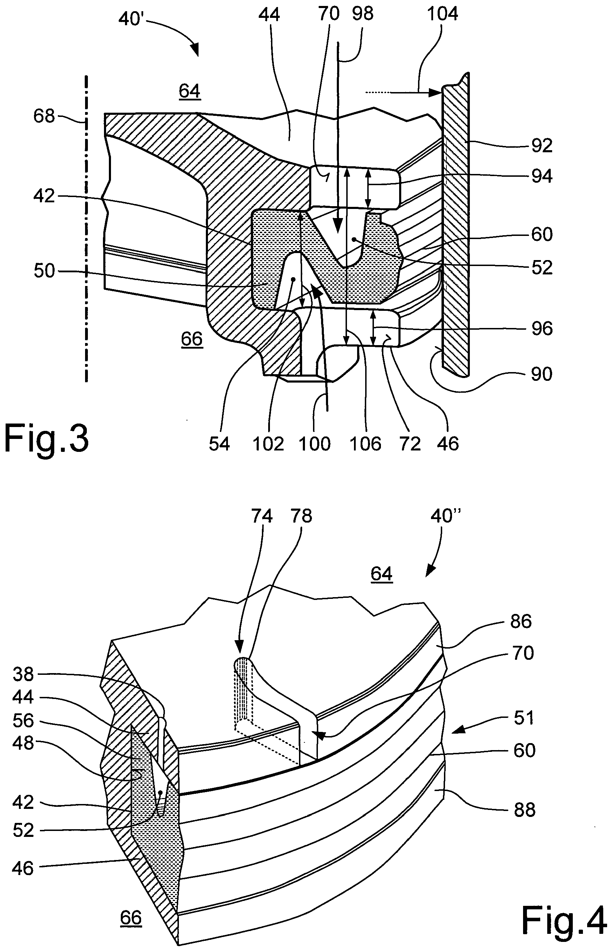

Durch die beiden Ausnehmungen 70, 72 gelangt das Fluid aus den gegenüberliegenden und vom Kolben 40 separierten Zylinderräumen 64, 66 nahezu widerstandsfrei in die zur Optimierung der Abdichtungswirkung am Dichtring 50 vorgesehenen Druckunterstützungsräume 52, 54. Die Unterstützung der Abdichtungswirkung des Kolbens 40 erfolgt hierbei im Wesentlichen durch eine geringfügige radiale Expansion des Dichtrings 50 infolge des beidseitig in die Druckunterstützungsräume 52, 54 einströmenden sowie unter Druck stehenden Fluids. Hierdurch wird der Dichtvorsprung 60 mit einer radialen Kraft fest gegen eine Innenmantelfläche 92 eines den Kolben 40 koaxial umgebenden Zylinders 92 zur Anlage gebracht (vergleiche hierzu Fig. 3).

Um die Rissbildungsneigung innerhalb des Kolbens 40 durch Kerbspannungen zu reduzieren, weisen radial nach innen, in Richtung der Längsmittelachse 68, gerichtete Endabschnitte 74, 76 der Ausnehmungen 70, 72 jeweils eine Rundung 78, 80 mit einem geeigneten Krümmungsradius auf.

Die radiale Länge 82, 84 der Ausnehmungen 70, 72 ist ausgehend von Außenrändern 86, 88 der ersten und der zweiten Nutwand 44, 46 jeweils so bemessen, dass die Ausnehmungen 70, 72 die Druckunterstützungsräume 52, 54 im Idealfall radial vollständig überdecken, um einen möglichst ungehinderten Druckausgleich des Fluids zwischen den Druckunterstützungsräumen 52, 54 und den Zylinderräumen 64, 66 zu erzielen. Da die Geometrie und/oder die Einbaurichtung eines Airzet-Dichtringes oder eines ähnlichen Dichtringes nicht fest vorgegeben ist, kann die Länge der schlitzförmigen Ausnehmungen 70, 72 im Vergleich zueinander gleich oder ungleich sein. Um unterschiedliche Dichtringvarianten und Einbauvarianten abzudecken, erstrecken sich die schlitzförmigen Ausnehmung 70, 72 jedoch bevorzugt radial bis zum Nutboden 48.

Der Dichtring 50 kann, abgesehen von den Leisten zur Kavitätsbildung für den Fluiddurchtritt, im Wesentlichen gemäß des im Rahmen der vorstehenden Beschreibung von Fig. 1 bereits näher erläuterten, beidseitig druckunterstützten Dichtrings
("Airzet"-Dichtrings) ausgebildet sein. Abweichend hiervon können auch andere druckunterstützte Dichtelemente mit einer abweichenden geometrischen Gestaltung zum Einsatz kommen.

Wie Fig. 2 im Bereich der linken Schnittfläche zeigt, können zusätzlich oder anstelle der schlitzförmigen Ausnehmungen 70, 72 in die beiden Nutwände 44, 46 als Öffnungen mehrere zur Längsmittelachse 68 achsparallele Bohrungen 38, 39 eingebracht sein. Diese Bohrungen 38, 39 sind gleichfalls im Bereich der Druckunterstützungsräume 52, 54 in die Nutwände 44, 46 eingebracht und durchsetzen diese Nutwände 44, 46 axial vollständig, um einen möglichst ungehinderten Durchtritt des Fluids zu ermöglichen.

Fig. 3 zeigt einen schematischen Teilquerschnitt durch einen Kolben 40', wie er auch in Fig. 2 dargestellt ist. Der Dichtring 50 ist wiederum in der Ringnut 42 aufgenommen und dichtet den Kolben 40' mittels seines Dichtvorsprungs 60 gegenüber der Innenmantelfläche 90 des hier lediglich schematisch angedeuteten Zylinders 92 ab. Sowohl der Kolben 40' als auch der Zylinder 92 sind koaxial zur Längsmittelachse 68 angeordnet. In der ersten Nutwand 44 ist eine erste schlitzförmige Ausnehmung 70 ausgebildet, während in der zweiten Nutwand 46, axial darunterliegend eine zweite Ausnehmung 72 eingebracht ist. Die erste Ausnehmung 70 erstreckt sich hierbei axial über die volle Materialstärke 94 der ersten Nutwand 44 und die zweite Ausnehmung 72 erstreckt sich über die volle Materialstärke 96 der zweiten Nutwand 46. Durch die erste Ausnehmung 70 in der ersten Nutwand 44 gelangt ein im ersten Zylinderraum 64 enthaltenes Fluid gemäß dem ersten Strömungspfeil 98 in den ersten Druckunterstützungsraum 52, während das Fluid aus dem zweiten Zylinderraum 66 in Richtung gemäß dem zweiten Strömungspfeil 100 weitgehend ungehindert durch die in der zweiten Nutwand 46 befindliche zweite Ausnehmung 72 in den zweiten Druckunterstützungsraum 54 strömen kann.

Vorzugsweise ist die Materialstärke 94, 96 beider Nutwände 44, 46 jeweils kleiner oder gleich der Nuthöhe 102 der Ringnut 42. Der Kolbendurchmesser 104 im Bereich der Ringnut 42 ist darüber hinaus bevorzugt größer als eine Kolbenhöhe 106 in dem genannten Bereich.

Wie Fig. 4 zeigt, ist in die Ringnut 42 des Kolbens 40" auch ein Dichtring 51 einsetzbar, der zusammen mit einer Nutwand 44 der Ringnut 42 nur einen Druckunterstützungsraum 52 bildet. In diesem nicht erfindungsgemäßen Fall reicht es aus, wenn der durch die schlitzförmige Ausnehmung 70 in der ersten Nutwand 44 in den einzigen Druckunterstützungsraum 52 gelangende Fluiddruck den durch diese Ausnehmung 70 dünneren und damit flexibleren oberen Dichtringabschnitt mit einer zusätzlichen Kraft radial gegen die Innenmantelfläche 90 des Zylinders 92 drückt.

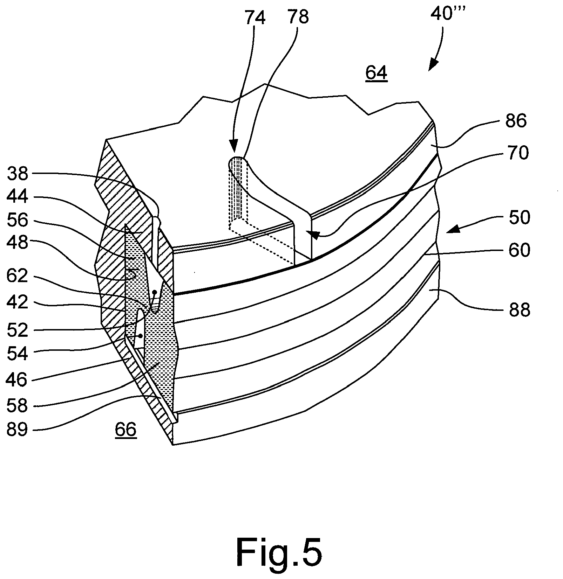

In der in Fig. 5 gezeigten, nicht erfindungsgemäßen Ausführung sind durch den Dichtring 50 und die Nutwände 44, 46 der Ringnut 42 des Kolbens 40''' zwei Druckunterstützungsräume 52, 54 ausgebildet. Der erste, obere Druckunterstützungsraum 52 steht über zumindest eine schlitzförmige Ausnehmung 70 mit dem ersten, oberen Druckraum 64 in Verbindung, während der zweite, untere Druckunterstützungsraum 54 mit dem zweiten, unteren Druckraum 66 über eine radiale Rinne 89 in Fluidverbindung steht, welche an der dichtringnahen Seite der zweiten, unteren Nutwand 46 ausgebildet ist. Solche radiale Rinnen 89 können auch zusätzlich an den jeweiligen, mit den genannten axialen Öffnungen 38, 39, 70, 72 versehenen Nutwänden 44, 46 angeordnet sein, um die Belüftung des zumindest einen Druckunterstützungsraumes 52, 54 zu unterstützen.

Infolge der in wenigstens eine der beiden Nutwände 44, 46 eingelassenen schlitzförmigen Ausnehmungen 70, 72 ist jeweils ein problemloser Druckausgleich des Fluids zwischen den beiden Zylinderräumen 64, 66 und den beiden Druckunterstützungsräumen 52, 54 möglich, auch wenn es beispielsweise zu einer betriebsbedingten geometrischen Verformung des Dichtrings 50, 51 kommt. Hierdurch ist unter allen Einsatzbedingungen des Kolbens 40, 40', 40", 40"'eine optimale Abdichtungswirkung zwischen den Zylinderräumen 64, 66 realisierbar. Bei dem Kolben 40, 40', 40", 40''' kann es sich beispielsweise um einen druckluftbetriebenen Relaiskolben eines pneumatischen Systems handeln.

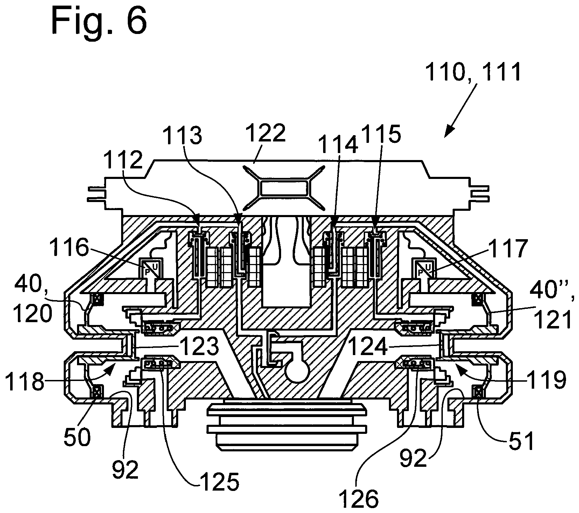

In Fig. 6 ist ein Ausführungsbeispiel eines Steuerventils 110 einer Druckluftanlage eines Fahrzeuges in schematischer Schnittdarstellung gezeigt, in welcher der Kolben 40, bzw. der Kolben 40', 40" oder 40''' eingebaut ist. Bei dem Steuerventil 110 handelt es sich um einen Achsmodulator 111 einer nicht näher dargestellten EBS-Bremsanlage eines ebenfalls nicht dargestellten Nutzfahrzeuges mit pneumatischer Bremsanlage. Der Aufbau des Achsmodulators 111 ist an sich bekannt; ein Achsmodulator mit dem in Fig. 6 dargestellten Prinzipaufbau ist als "EBS-Achsmodulator 2. Generation" von der Anmelderin seit 2004 im Handel und unter der Teilenummer 480 104 104 0 von der Anmelderin lieferbar.

Der Achsmodulator 111 regelt den Bremszylinderdruck auf beiden Seiten einer oder zweier Achsen des Nutzfahrzeuges. Er verfügt über zwei pneumatisch unabhängige Druckregelkreise mit jeweils zwei Magnetventilen 112 - 115, jeweils einem Bremsdrucksensor 116, 117, jeweils einem Relaisventil 118, 119 und einer gemeinsamen Regelelektronik (ECU) 122 Über nicht dargestellte Drehzahlsensoren erfasst der Achsmodulator 111 die Radgeschwindigkeiten, wertet sie aus und sendet sie an ein nicht dargestelltes Zentralmodul des Fahrzeugs, das daraufhin die Solldrücke ermittelt. ABS-Regelungen nimmt der Achsmodulator 111 eigenständig vor. Bei Blockier-oder Durchdrehneigung von Rädern des Fahrzeugs modifiziert der Achsmodulator 111 den vorgebenen Solldruck.

Die Relaisventile 118, 119 weisen jeweils einen der zuvor beschriebenen Kolben 40, 40', 40" oder 40''' als Steuerkolben 120, 121 auf; im dargestellten Ausführungsbeispiel weist das in der Figur links angeordnete Relaisventil 118 als Steuerkolben 120 den Kolben 40 mit Dichtring 50 gemäß Fig. 2 auf, während das in der Figur rechts angeordnete Relaisventil 119 als Steuerkolben 121 den Kolben 40" mit Dichtring 51 gemäß Fig. 4 aufweist. Es lassen sich aber auch gleich ausgebildete Kolben einsetzen, also beispielsweise jeweils zwei Kolben 40 mit Dichtringen 50.

Die Kolben 40, 40" der Relaisventile 118, 119 liegen mit ihren Dichtringen 50, 51 jeweils am Zylinder 92 an. Die Kolben 40, 40" weisen jeweils einen Kolbenboden 123, 124 auf, welche ein jeweils zugeordnetes Plattenventil 125, 126 betätigen.

Die Verwendungsmöglichkeiten der Kolben 40, 40', 40" und 40''' sind nicht auf einen Achsmodulator 111 beschränkt, auch wenn die zuvor beschriebenen Kolben 40, 40', 40" und 40''' bevorzugt in einem Achsmodulator 111 der in Fig. 6 gezeigten Art, oder in einem anderen Achmodulator, beispielsweise in einem Achsmodulator der dritten Generation (beispielsweise WABCO Gerätenummer 480 105 001 0), eingesetzt werden. So ist die Verwendung der Kolben 40, 40', 40" und 40''' in ähnlich aufgebauten Steuerventilen von Fahrzeugdruckluftanlagen denkbar, insbesondere in Steuerventilen mit wenigstens einem Relaisventil, beispielsweise in Vorsteuerventilen von Lufttrockneranlagen, in Relaisventilen von PKW-Luftfederungsanlagen, in Proportional-Relaisventilen, in Redundanz-Ventilen, in Bremswertgebern, in Fußbremsventilen, Anhängermodulatoren, oder in Anhängersteuerventilen. Ebenso ist es denkbar, einen einkanaligen Achsmodulator mit nur einem Relaisventil, wie er von der Anmelderin unter Teilenummer 480 106 511 0 erhältlich ist, mit einem Relaisventil mit einem Steuerkolben zu versehen, welcher einen Kolben 40, 40', 40", oder 40''' in der zuvor beschriebenen Ausgestaltung aufweist.

### Bezugszeichen

- 10: Kolben gemäß dem Stand der Technik
- 12: Ringnut
- 14: Dichtring ("Airzet"-Dichtring)
- 16: Halteabschnitt am Dichtring 14
- 18: Dichtabschnitt am Dichtring 14
- 20: Zwischenabschnitt am Dichtring 14
- 22: Erster Druckunterstützungsraum am Dichtring 14
- 24: Zweiter Druckunterstützungsraum am Dichtring 14
- 26: Pfeil, Fluidströmung
- 28: Pfeil, Fluidströmung
- 30: Erster Zylinderraum
- 32: Zweiter Zylinderraum
- 34: Erste Leiste am Dichtring 14
- 36: Zweite Leiste am Dichtring 14
- 38: Bohrung, Öffnung in der erste Nutwand
- 39: Bohrung, Öffnung in der zweiten Nutwand
- 40: Kolben gemäß der Erfindung (beispielsweise Relaiskolben)
- 42: Ringnut
- 44: Erste Nutwand
- 46: Zweite Nutwand
- 48: Nutboden
- 50: Dichtring
- 51: Dichtring
- 52: Erster Druckunterstützungsraum
- 54: Zweiter Druckunterstützungsraum
- 56: Halteabschnitt am Dichtring 50
- 58: Dichtabschnitt am Dichtring 50
- 60: Dichtvorsprung am Dichtring 50
- 62: Zwischenabschnitt am Dichtring 50
- 64: Erster Zylinderraum
- 66: Zweiter Zylinderraum
- 68: Längsmittelachse
- 70: Ausnehmung, Öffnung in Nutwand 44
- 72: Ausnehmung, Öffnung in Nutwand 46
- 74: Endabschnitt der Ausnehmung 70
- 76: Endabschnitt der Ausnehmung 76
- 78: Rundung der Ausnehmung 70
- 80: Rundung der Ausnehmung 72
- 82: Länge der Ausnehmung 70
- 84: Länge der Ausnehmung 72
- 86: Außenrand der ersten Nutwand
- 88: Außenrand der ersten Nutwand
- 89: Rinne
- 90: Innenmantelfläche des Zylinders
- 92: Zylinder
- 94: Materialstärke der ersten Nutwand
- 96: Materialstärke der zweiten Nutwand
- 98: Pfeil, Fluidströmung
- 100: Pfeil, Fluidströmung
- 102: Nuthöhe
- 104: Kolbendurchmesser im Ringnutbereich
- 106: Kolbenhöhe im Ringnutbereich
- 110: Steuerventil
- 111: Achsmodulator
- 112: Magnetventil
- 113: Magnetventil
- 114: Magnetventil
- 115: Magnetventil
- 116: Bremsdrucksensor
- 117: Bremsdrucksensor
- 118: Relaisventil
- 119: Relaisventil
- 120: Steuerkolben
- 121: Steuerkolben
- 122: Regelelektronik
- 123: Kolbenboden
- 124: Kolbenboden
- 125: Plattenventil
- 126: Plattenventil

## Patentansprüche

1. Kolben (40, 40', 40", 40''' für ein Steuerventil (110) in einer Druckluftanlage eines Fahrzeugs, welcher entlang einer Längsmittelachse (68) axial verschiebbar in einem Zylinder (92) derart aufnehmbar ist, dass er einen ersten Zylinderraum (64) und einen zweiten Zylinderraum (66) voneinander trennt, welcher (40) eine umlaufende Ringnut (42) mit einer von zwei Nutwänden (44. 46) gebildeten, näherungsweise rechteckförmigen Querschnittsgeometrie aufweist, in der ein Dichtring (50, 51) einsetzbar ist, der mit seinem freien Ende an die Innenmantelfläche (90) des Zylinders (92) anlegbar ist sowie nach dessen Einsetzen in die Ringnut (42) des Kobens (40, 40', 40", 40''') zusammen mit wenigstens einer Nutwand (44, 46) zumindest einen Druckunterstützungsraum (52; 54) begrenzt, wobei der Kolben (40, 40', 40", 40''') im Bereich seiner Ringnut (42) wenigstens eine axiale Öffnung (38, 39; 70, 72) aufweist, welche bei Einsatz des Kolbens den zumindest einen Druckunterstützungsraum (52; 54) mit dem zugeordneten ersten oder zweiten Zylinderraum (64, 66) verbindet, **dadurch gekennzeichnet, dass** der Kolben (40, 40') im Bereich seiner Ringnut (42) in jeder seiner beiden Nutwände (44, 46) wenigstens eine axiale Öffnung (38, 39; 70, 72) aufweist, welche bei Einsatz des Kolbens zwei Druckunterstützungsräume (52, 54) mit dem jeweils zugeordneten ersten oder zweiten Zylinderraum (64, 66) verbinden, wobei die beiden Druckunterstützungsräume (52, 54) durch den Dichtring (50) sowie durch die dem Dichtring (50) jeweils zugeordneten zugeordnete Nutwände (44, 46) gebildet sind.

2. Kolben nach Anspruch 1, **dadurch gekennzeichnet, dass** eine erste Nutwand (44) der zwei Nutwände und die zweite Nutwand (46) jeweils mindestens drei axiale Öffnungen (38, 39; 70, 72) aufweisen, die gleichmäßig zueinander beabstandet umfangsbezogen entlang der Ringnut (42) verteilt angeordnet sind.

3. Kolben nach Anspruch 1 oder 2, **dadurch gekennzeichnet, dass** die Öffnungen (38, 39; 70, 72) in der ersten Nutwand (44) und in der zweiten Nutwand (46) umfangsbezogen sowie radial jeweils übereinander angeordnet sind.

4. Kolben nach einem der Ansprüche 1 bis 3, **dadurch gekennzeichnet, dass** die Öffnungen in den Nutwänden (44, 46) als schlitzförmige und radial verlaufende Ausnehmungen (70, 72) mit einer jeweils näherungsweise rechteckförmigen Querschnittsgeometrie ausgebildet sind.

5. Kolben nach Anspruch 4, **dadurch gekennzeichnet, dass** die Ausnehmungen (70) in der ersten Nutwand (44) jeweils ausgehend von deren radialen Außenrand (86) radial nach innen gerichtet zumindest bis in den Bereich eines, bei Einsatz des Kolbens darunter liegenden ersten Druckunterstützungsraumes (52) verlaufen.

6. Kolben nach Anspruch 4, **dadurch gekennzeichnet, dass** die Ausnehmungen (72) in der zweiten Nutwand (46) jeweils ausgehend von deren radialen Außenrand (88) radial nach innen gerichtet zumindest bis in den Bereich eines, bei Einsatz des Kolbens darüber liegenden zweiten Druckunterstützungsraumes (54) verlaufen.

7. Kolben nach Anspruch 4, **dadurch gekennzeichnet, dass** wenigstens eine der Ausnehmungen (70, 72) in der ersten Nutwand (44) und/oder in der zweiten Nutwand (46) jeweils ausgehend von deren radialen Außenrand (86, 88) radial nach innen gerichtet bis zu dem Nutboden (48) verlaufen.

8. Kolben einem der vorherigen Ansprüche 4 bis 7, **dadurch gekennzeichnet, dass** radial innenliegende Endabschnitte (74, 76) der schlitzförmigen Ausnehmungen (70, 72) jeweils eine Rundung (78, 80) aufweisen.

9. Kolben nach einem der vorherigen Ansprüche, **dadurch gekennzeichnet, dass** die Öffnungen als durchgehende Bohrungen (38, 39) ausgebildet sind, dass diese Bohrungen (38, 39) bei Einsatz des Kolbens jeweils im radialen Bereich des wenigstens einen Druckunterstützungsraumes (52, 54) angeordnet sind, und dass die Bohrungen (38, 39) jeweils senkrecht zur Flächennormalen in der dem Druckunterstützungsraum (52, 54) zugeordneten Nutwand (44, 46) eingebracht sind.

10. Kolben nach einem der vorherigen Ansprüche, **dadurch gekennzeichnet, dass** der Kolben (40''') im Bereich seiner Ringnut (42) in einer Nutwand (44) die wenigstens eine axiale Öffnung (38, 39; 70, 72) aufweist, welche, bei Einsatz des Kolbens einen ersten Druckunterstützungsraum (52) mit einem ersten Zylinderraum (64) verbindet, und dass in der anderen Nutwand (46) dichtringseitig wenigstens eine radiale Rinne (89) ausgebildet ist, welche, bei Einsatz des Kolbens den zweiten Druckunterstützungsraum (54) mit dem zweiten Zylinderraum (64) verbindet.

11. Kolben nach einem der vorherigen Ansprüche, **dadurch gekennzeichnet, dass** der Kolben (40, 40', 40", 40''') als Steuerkolben (120, 121) eines Steuerventils (110) einer Druckluftanlage eines Fahrzeuges ausgebildet ist.

12. Kolben nach Anspruch 11, **dadurch gekennzeichnet, dass** das Steuerventil (110) wenigstens ein Relaisventil (118; 119) mit dem Steuerkolben (120; 121) aufweist.

13. Kolben nach Anspruch 11, **dadurch gekennzeichnet, dass** das Steuerventil (110) als Achsmodulator (111) ausgebildet ist, welcher wenigstens ein Relaisventil (118; 119), vorzugsweise zwei Relaisventile (118, 119) mit jeweils einem Steuerkolben (120, 121) aufweist.

## Claims

1. Piston (40, 40', 40", 40''') for a control valve (110) in a compressed-air system of a vehicle, which piston can be accommodated in a cylinder (92) so as to be axially displaceable along a longitudinal centre axis (68) in such a way that it separates a first cylinder chamber (64) and a second cylinder chamber (66) from each other, which piston (40) has a peripheral annular groove (42) having an approximately rectangular cross-sectional geometry formed by two groove walls (44, 46), in which annular groove there can be inserted a sealing ring (50, 51) which can be placed by its free end against the inner lateral surface (90) of the cylinder (92) and, after its insertion into the annular groove (42) of the piston (40, 40', 40", 40'''), delimits, together with at least one groove wall (44, 46), at least one pressure support chamber (52; 54), wherein the piston (40, 40', 40", 40''') has in the region of its annular groove (42) at least one axial opening (38, 39; 70, 72) which, during use of the piston, connects the at least one pressure support chamber (52; 54) to the associated first or second cylinder chamber (64, 66), **characterized in that** the piston (40, 40') has in the region of its annular groove (42), in each of its two groove walls (44, 46), at least one axial opening (38, 39; 70, 72) which, during use of the piston, connect two pressure support chambers (52, 54) to the respectively associated first or second cylinder chamber (64, 66), wherein the two pressure support chambers (52, 54) are formed by the sealing ring (50) and by the groove walls (44, 46) which are respectively associated with the sealing ring (50) .

2. Piston according to Claim 1, **characterized in that** a first groove wall (44) of the two groove walls and the second groove wall (46) each have at least three axial openings (38, 39; 70, 72) which are arranged distributed circumferentially along the annular groove (42) uniformly spaced-apart from one another.

3. Piston according to Claim 1 or 2, **characterized in that** the openings (38, 39; 70, 72) in the first groove wall (44) and in the second groove wall (46) are respectively arranged above one another circumferentially and radially.

4. Piston according to one of Claims 1 to 3, **characterized in that** the openings in the groove walls (44, 46) take the form of slot-shaped and radially extending cutouts (70, 72) having an approximately rectangular cross-sectional geometry in each case.

5. Piston according to Claim 4, **characterized in that** the cutouts (70) in the first groove wall (44) each extend, starting from its radial outer edge (86), in a radially inwardly directed manner at least into the region of a first pressure support chamber (52) situated below during use of the piston.

6. Piston according to Claim 4, **characterized in that** the cutouts (72) in the second groove wall (46) each extend, starting from its radial outer edge (88), in a radially inwardly directed manner at least into the region of a second pressure support chamber (54) situated above during use of the piston.

7. Piston according to Claim 4, **characterized in that** at least one of the cutouts (70, 72) in the first groove wall (44) and/or in the second groove wall (46) in each case extends, starting from its radial outer edge (86, 88), in a radially inwardly directed manner as far as the groove bottom (48).

8. Piston according to one of the preceding Claims 4 to 7, **characterized in that** radially inner end portions (74, 76) of the slot-shaped cutouts (70, 72) each have a rounding (78, 80).

9. Piston according to one of the preceding claims, **characterized in that** the openings take the form of through-bores (38, 39), **in that**, during use of the piston, these bores (38, 39) are each arranged in the radial region of the at least one pressure support chamber (52, 54), and **in that** the bores (38, 39) are each incorporated perpendicular to the surface normal in the groove wall (44, 46) associated with the pressure support chamber (52, 54).

10. Piston according to one of the preceding claims, **characterized in that** the piston (40''') has the at least one axial opening (38, 39; 70, 72) in the region of its annular groove (42) in one groove wall (44), which opening, during use of the piston, connects a first pressure support chamber (52) to a first cylinder chamber (64), and **in that** at least one radial channel (89) is formed in the other groove wall (46) on the sealing ring side and, during use of the piston, connects the second pressure support chamber (54) to the second cylinder chamber (64).

11. Piston according to one of the preceding claims, **characterized in that** the piston (40, 40', 40", 40''') is designed as a control piston (120, 121) of a control valve (110) of a compressed-air system of a vehicle.

12. Piston according to Claim 11, **characterized in that** the control valve (110) has at least one relay valve (118; 119) having the control piston (120; 121).

13. Piston according to Claim 11, **characterized in that** the control valve (110) is designed as an axle modulator (111) which has at least one relay valve (118; 119), preferably two relay valves (118, 119) each having a control piston (120, 121).

## Revendications

1. Piston (40, 40', 40", 40''') pour une soupape de commande (110) dans une installation d'air comprimé d'un véhicule, qui peut être logé dans un cylindre (92) d'une façon déplaçable axialement le long d'un axe longitudinal central (68), de telle manière qu'il sépare l'une de l'autre une première chambre de cylindre (64) et une seconde chambre de cylindre (66), qui (40) présente une rainure annulaire périphérique (42) avec une géométrie de section transversale approximativement rectangulaire formée par deux parois de rainure (44, 46), dans laquelle peut être inséré un joint d'étanchéité (50, 51), qui peut être appliqué avec son extrémité libre sur la surface latérale intérieure (90) du cylindre (92) et qui limite, après son insertion dans la rainure annulaire (42) du piston (40, 40', 40", 40'''), de concert avec au moins une paroi de rainure (44, 46), au moins une chambre de soutien de pression (52; 54), dans lequel le piston (40, 40', 40", 40''') présente dans la région de sa rainure annulaire (42) au moins une ouverture axiale (38, 39; 70, 72) qui lors de l'introduction du piston relie ladite au moins une chambre de soutien de pression (52; 54) à la première ou à la seconde chambre de cylindre (64, 66) qui lui est associée, **caractérisé en ce que** le piston (40, 40') présente dans la région de sa rainure annulaire (42) dans chacune de ses deux parois de rainure (44, 46) au moins une ouverture axiale (38, 39; 70, 72), qui lors de l'introduction du piston relient deux chambres de soutien de pression (52, 54) avec la première ou la seconde chambre de cylindre (64, 66) respectivement associée, dans lequel les deux chambres de soutien de pression (52, 54) sont formées par le joint d'étanchéité (50) ainsi que par les parois de rainure (44, 46) respectivement associées au joint d'étanchéité (50).

2. Piston selon la revendication 1, **caractérisé en ce qu'**une première paroi de rainure (44) des deux parois de rainure et la seconde paroi de rainure (46) présentent respectivement au moins trois ouvertures axiales (38, 39; 70, 72), qui sont disposées de façon répartie à distance uniforme l'une de l'autre selon la périphérie le long de la rainure annulaire (42).

3. Piston selon une revendication 1 ou 2, **caractérisé en ce que** les ouvertures (38, 39; 70, 72) dans la première paroi de rainure (44) et dans la seconde paroi de rainure (66) sont disposées selon la périphérie et chaque fois radialement l'une au-dessus de l'autre.

4. Piston selon l'une quelconque des revendications 1 à 3, **caractérisé en ce que** les ouvertures dans les parois de rainure (44, 46) sont réalisées sous forme d'évidements (70, 72) en forme de fente et s'étendant radialement avec une géométrie de section transversale chaque fois approximativement rectangulaire.

5. Piston selon la revendication 4, **caractérisé en ce que** les évidements (70) dans la première paroi de rainure (44) s'étendent respectivement à partir de leur bord extérieur radial (86) de façon orientée radialement vers l'intérieur au moins jusque dans la région d'une première chambre de soutien de pression (52) située en dessous lors de l'introduction du piston.

6. Piston selon la revendication 4, **caractérisé en ce que** les évidements (72) dans la seconde paroi de rainure (46) s'étendent respectivement à partir de leur bord extérieur radial (88) de façon orientée radialement vers l'intérieur au moins jusque dans la région d'une seconde chambre de soutien de pression (54) située au-dessus lors de l'introduction du piston.

7. Piston selon la revendication 4, **caractérisé en ce qu'**au moins un des évidements (70, 72) dans la première paroi de rainure (44) et/ou dans la seconde paroi de rainure (46) s'étend respectivement à partir de son bord extérieur radial (86, 88) de façon orientée radialement vers l'intérieur jusqu'au fond de rainure (48) .

8. Piston selon l'une quelconque des revendications 4 à 7, **caractérisé en ce que** des parties d'extrémité radialement intérieures (74, 76) des évidements en forme de fente (70, 72) présentent respectivement un arrondi (78, 80).

9. Piston selon l'une quelconque des revendications précédentes, **caractérisé en ce que** les ouvertures sont réalisées sous forme de trous percés (38, 39), **en ce que** ces trous (38, 39) sont disposés lors de l'introduction du piston respectivement dans la région radiale de ladite au moins une chambre de soutien de pression (52, 54), et **en ce que** les trous (38, 39) sont pratiqués chacun perpendiculairement à la normale à la surface dans la paroi de rainure (44, 46) associée à la chambre de soutien de pression (52, 54).

10. Piston selon l'une quelconque des revendications précédentes, **caractérisé en ce que** le piston (40''') présente dans la région de sa rainure annulaire (42) dans une paroi de rainure (44) ladite au moins une ouverture axiale (38, 39; 70, 72), qui lors de l'introduction du piston relie une première chambre de soutien de pression (52) à une première chambre de cylindre (64), et **en ce qu'**au moins une rainure radiale (89) est formée dans l'autre paroi de rainure (46) côté joint d'étanchéité, qui lors de l'introduction du piston relie la seconde chambre de soutien de pression (54) à la seconde chambre de cylindre (64).

11. Piston selon l'une quelconque des revendications précédentes, **caractérisé en ce que** le piston (40, 40', 40", 40"') forme un piston de commande (120, 121) d'une soupape de commande (110) d'une installation d'air comprimé d'un véhicule.

12. Piston selon la revendication 11, **caractérisé en ce que** la soupape de commande (110) présente au moins une soupape relais (118; 119) avec le piston de commande (120; 121).

13. Piston selon la revendication 11, **caractérisé en ce que** la soupape de commande (110) est réalisée sous forme de modulateur axial (111), qui présente au moins une soupape relais (118; 119), de préférence deux soupapes relais (118, 119) chacune avec un piston de commande (120, 121).
